# EUROPÄISCHE PATENTSCHRIFT

(11) **EP 4 479 256 B1**
(45) Veröffentlichungstag und Bekanntmachung des Hinweises auf die Patenterteilung: **06.05.2026**
(21) Anmeldenummer: 22709275.6
(22) Anmeldetag: 14.02.2022
(51) Int. Cl.: F16G 15/04, B60C 27/08

(54) **KETTENGLIED FÜR EINE REIFENKETTE**
CHAIN LINK FOR A TYRE CHAIN
MAILLON DE CHAÎNE POUR UNE CHAÎNE DE PNEU

(43) Veröffentlichungstag der Anmeldung: 25.12.2024
(73) Patentinhaber: RUD Ketten Rieger & Dietz GmbH u. Co. KG, 73432 Aalen (DE)
(72) Erfinder: RÖSLER, Bernd, 73433 Aalen (DE); RIEGER, Johannes, 73447 Oberkochen (DE); RIEDELSHEIMER, Helmut, 73434 Aalen-Mädle (DE)
(74) Vertreter: Grünecker Patent- und Rechtsanwälte PartG mbB
(86) Internationale Anmeldenummer: PCT/EP2022/053458
(87) Internationale Veröffentlichungsnummer: WO 2023/151818

(56) Entgegenhaltungen:
- DE-A1- 102019 209 107
- DE-A1- 19 958 027
- DE-A1- 2 021 022
- DE-A1- 2 021 034
- DE-A1- 3 149 970
- GB-A- 1 145 892
- US-A- 5 133 179

## Beschreibung

Die Erfindung betrifft ein Kettenglied für eine Reifenkette.

Es ist bekannt, Fahrzeuge mit Reifenketten, beispielsweise Reifenschutzketten oder Gleitschutzketten, zum Schutz der Fahrzeugreifen und/oder zur Erhöhung der Traktion auf der zu befahrenden Oberfläche auszustatten. Insbesondere auf Baustellen und/oder Bergwerken können Reifenketten die Fahrzeugreifen vor spitzen oder scharfkantigen Gegenständen schützen. Die Kettenglieder der Kettenstränge sind dabei hohen Belastungen und hohem Verschleiß ausgesetzt, so dass ein vergleichsweise hoher Materialaufwand zu betreiben ist. Außerdem müssen für unterschiedlich große Reifen entsprechend unterschiedlich große Reifenketten gefertigt werden. Hierfür ist es von Vorteil, wenn die Fertigung der Reifenkette flexibel und unter möglichst geringer Lagerhaltung stattfindet.

Die DE 10 2019 209107 A1 offenbart einen Kettenstrang für eine Reifenkette mit einer Mehrzahl von ineinandergehängten Kettengliedern, wobei wenigstens ein Kettenglied eine als Schweißstelle ausgebildete Fügestelle aufweist. Das Kettenglied kann aus wenigstens zwei miteinander verschweißten Teilen aufgebaut sein, die über eine Formschlussverbindung miteinander verbunden sein können. Ein Teil kann mit einem Zapfen versehen sein, der in eine Öffnung des anderen Teils eingesteckt ist. Das Teil mit der Öffnung kann eine die Öffnung umgebende Aussparung aufweisen.

Die US 5 133 179 A betrifft ein Kettenglied umfassend ein C-förmiges Element und ein Verbindungselement mit zwei freien Enden. Das C-förmige Element weist einander zugewandte freie Enden auf, wobei das Verbindungselement ausgestaltet ist, das C-förmige Element zu ergänzen und damit einen vollständigen Ring bilden, der in einer zusammengebauten Position im Wesentlichen eine Ebene definiert.

Die GB 1 145 892 A zeigt ein Kettenverschlussglied bestehend aus einem C-förmigen Körper, dessen Enden sich aufeinander zu erstrecken und mit einer zum C-förmigen Körper komplementär ausgestalteten Schließvorrichtung ineinandergreifen können. Die Schließvorrichtung weist zwei zueinander drehbare Teile auf, wobei eines der Teile undrehbar und zum Schließen der Lücke zwischen den Enden des C-förmigen Körpers vorgesehen ist. Durch Drehung des einen Teils kann das andere Teil in der Lücke axial fixiert werden.

Folglich ist es Aufgabe der Erfindung, ein Kettenglied bereitzustellen, das eine automatisierte und flexible Herstellung von Reifenketten ermöglicht.

Diese Aufgabe wird erfindungsgemäß für das oben genannte Kettenglied dadurch gelöst, dass das Kettenglied ein erstes Teil und ein mit dem ersten Teil verschweißtes zweites Teil aufweist, wobei das erste Teil mit wenigstens zwei nebeneinander angeordneten Stegen versehen ist. Eine Einhängeöffnung des Kettenglieds ist von jeweils zwei Stegen und dem zweiten Teil begrenzt. Das zweite Teil ist an zwei sich gegenüberliegenden Seiten mit Ausnehmungen versehen, in denen jeweils ein Ende der Stege eingesetzt ist. Das erste Teil weist drei Stege auf und zwischen jeweils zwei Stegen befindet sich eine Einhängeöffnung, wobei die drei Stege in drei Ausnehmungen des zweiten Teils eingesetzt sind und wobei die Ausnehmungen und Stege alternierend an den sich gegenüberliegenden Seiten angeordnet sind.

Durch die oben genannte Lösung ist es möglich, dass ein aus einzelnen Kettengliedern zusammengesetzter Kettenstrang für eine Reifenkette modular aufgebaut bzw. erweitert werden kann. So können je nach Bedarf eine beliebig große Anzahl an Kettengliedern in einem Kettenstrang miteinander gekoppelt werden. Weiterhin können das erste Teil und das zweite Teil unabhängig voneinander vorbehandelt werden und/oder unterschiedliche Materialeigenschaften aufweisen.

Da die Enden der wenigstens zwei Stege in korrespondierende Ausnehmungen des zweiten Teils eingesetzt und die Ausnehmungen an zwei sich gegenüberliegenden Seiten des zweiten Teils angeordnet sind, können das erste Teil und das zweite Teil vor dem Schweißen zumindest in einer Rotationsrichtung relativ zueinander positioniert werden. Folglich sind die Teile beim Verschweißen bereits vorpositioniert die Handhabung des Kettenglieds bei der Produktion erleichtert sich. Die Schweißstelle ist an den Enden der Stege gut zugänglich, wodurch sich der Aufwand beim Schweißen verringert. All dies zusammen verbessert insbesondere die Eignung des Kettenglieds für eine automatisierte Produktion eines Kettenstrangs und/oder einer Reifenkette.

Im Folgenden sind Weiterbildungen angeführt, die unabhängig voneinander, beliebig miteinander kombinierbar und jeweils für sich betrachtet vorteilhaft sind.

So können gemäß einer ersten vorteilhaften Ausgestaltung das erste Teil und das zweite Teil unterschiedliche Materialeigenschaften aufweisen. Die Teile können hierfür ihren jeweiligen Aufgaben entsprechend optimiert sein. Beispielsweise kann das erste Teil ein Verschleißteil oder ein Verschlussteil sein. Bevorzugt jedoch kann das erste Teil als Verschleißteil ausgestaltet sein, welches im montierten Zustand, bei einer auf einem Fahrzeugreifen montierten Reifenkette, sich auf einer von einer Lauffläche des Fahrzeugreifens abgewandten Seite des Kettengliedes befindet. Das Verschleißteil kann beispielsweise durch eine entsprechende Wärmebehandlung ausgehärtet sein, wodurch sich dessen Verschleißbeständigkeit verbessert.

Das zweite Teil kann komplementär zum ersten Teil ein Verschlussteil oder ein Verschleißteil sein. Vorzugsweise kann das zweite Teil ein Verschlussteil sein, welches im montierten Zustand auf der Lauffläche des Fahrzeugreifens aufliegt. Das Verschlussteil ist im Vergleich zum Verschleißteil einer geringeren Belastung und Abnutzung ausgesetzt. Daher kann Gewicht eingespart werden, wenn das Verschlussteil aus einem im Vergleich zum Verschleißteil leichteren und/oder weicheren Material geformt ist.

Das erste Teil und das zweite Teil können unterschiedlich voneinander wärmevorbehandelt sein. Insbesondere können das erste Teil und das zweite Teil separat voneinander wärmevorbehandelt sein. Die Teile sind bei der Wärmebehandlung noch nicht verschweißt oder in einen Kettenstrang eingehängt. Somit kann beispielsweise zur Wärmebehandlung in einem Ofen die Ofenkapazität besser ausgenutzt werden, da eine dichtere Anordnung der Teile möglich ist. Weiterhin kann durch die Wärmebehandlung das Gefüge der beiden Teile an die jeweilige spezifische Funktion eingestellt werden, so dass die physikalischen Eigenschaften der Teile, wie z.B. die Härte, bestimmt werden können. Es besteht die Möglichkeit, die Wärmebehandlung individuell anzupassen, wodurch mehr Freiheiten bei der Gestaltung des Kettenglieds entstehen.

Vorzugsweise können das erste Teil und das zweite Teil vor dem Verschweißen wärmebehandelt sein. Die Wärmebehandlung vor dem Schweißen spiegelt sich im Gefüge des Kettengliedes wieder. Das Gefüge kann beispielsweise durch ein Lichtmikroskop untersucht werden, wobei durch eine Beurteilung der Größe, Form und Anordnung Rückschlüsse auf den Wärmebehandlungsprozess gezogen werden können.

Über das Gefügebild kann beispielsweise festgestellt werden, dass die Schweißstelle in ein zuvor wärmebehandeltes Gefüge eingebettet ist. Zwischen Schweißgut und das zuvor wärmebehandelte Gefüge kann an dem Kettenglied ein Übergangsabschnitt angeordnet sein, an dem durch das Schweißen das Gefüge sich vom restlichen Kettenglied unterscheidet.

Vorzugsweise kann jeweils das Ende eines Stegs mit der ihn aufnehmenden Ausnehmung verschweißt sein. Dadurch ergibt sich nicht nur eine große Kontaktfläche für die Schweißstelle, sondern auch eine von äußeren Einwirkungen geschützte Schweißstelle.

Die Schweißstelle kann sich insbesondere vollständig in der Ausnehmung befinden. Die Schweißstelle ragt also nicht aus der Ausnehmung heraus. Demnach kann verhindert werden, dass die Schweißstelle beispielsweise durch Steinschlag beschädigt wird. Hierfür kann vorgesehen sein, dass das zweite Teil die Stege überragt. Insbesondere kann das zweite Teil die Stege in einer Längsrichtung der Stege, in der sie sich von einer gemeinsamen Basis des ersten Teils wegerstrecken, überragen.

Gemäß einer vorteilhaften Ausgestaltung können die Ausnehmungen an zwei gegenüberliegenden Flachseiten des Kettenglieds angeordnet sein. Als Flachseite des Kettenglieds ist hierbei die größte Seite des Kettenglieds bezeichnet. Die Einhängeöffnung kann an den sich gegenüberliegenden Flachseiten des Kettenglieds offen sein. Folglich kann die Einhängeöffnung das Kettenglied von einer Flachseite zur gegenüberliegenden Flachseite durchsetzen.

Um den Zugang zur Schweißstelle beim Schweißen zu verbessern, können die Ausnehmungen in wenigstens einer Richtung offen sein. Demnach kann das Schweißwerkzeug von außen einfach die gewünschte Schweißstelle erreichen, wodurch der Schweißprozess weiter optimiert werden kann.

Insbesondere können sich die Ausnehmungen in Richtung von den Flachseiten weg öffnen. Alternativ oder auch zusätzlich dazu können die Ausnehmungen in Richtung weg vom ersten Teil offen sein. Vor allem die Kombination der offenen Ausnehmungen in Richtung von den Flachseiten weg und von dem ersten Teil weg ist vorteilhaft, da dadurch der Zugriff zu den sich in den Ausnehmungen befindlichen Stegen verbessert wird. Zumindest eine Ausnehmung kann auch seitlich nach außen hin, d.h. in einer Richtung parallel zur Flachseite und weg von der Einhängeöffnung, offen sein.

Soll der Zusammenbau des ersten und zweiten Teils weiter vereinfacht werden, kann vorgesehen sein, dass die Anzahl der Ausnehmungen der Anzahl der Stege entspricht. Demnach können die Teile vor dem Verschweißen intuitiv bereits richtig zusammengesetzt werden und Fehler vermieden werden.

Zwei der wenigstens zwei Stege können einen Bug des Kettenglieds bilden. Folglich können zwei Stege jeweils eine Seite des Kettenglieds bilden, die sich bei der auf dem Fahrzeugreifen montierten Reifenkette im Wesentlichen senkrecht zur Lauffläche des Fahrzeugreifens erstreckt.

Das erste Teil kann in einer Draufsicht auf die Flachseite einen bogenförmigen Querschnitt haben, wobei jeweils ein Steg eine Seite des Bogens, einen sogenannten Bug, bildet. Die Buge sind über eine gemeinsame Basis miteinander verbunden. Das zweite Teil kann in der Draufsicht auf die Flachseite einen plattenförmigen Querschnitt aufweisen. In einer Ausgestaltung kann der zweite Teil gekröpft sein.

Um die Positionierung des ersten und zweiten Teils relativ zueinander vor dem Verschweißen zu vereinfachen, kann das erste Teil wenigstens drei, insbesondere genau drei Stege aufweisen, wobei sich jeweils zwischen zwei Stegen eine Einhängeöffnung befindet. Die Enden der wenigstens drei Stege können in wenigstens drei korrespondierenden Ausnehmungen des zweiten Teils eingesetzt sein, wobei die Ausnehmungen und die Stege alternierend an sich gegenüberliegenden Seiten angeordnet sind. Durch die sich dadurch ergebende formschlüssige Verbindung zwischen den Teilen wird eine Rotationsbewegung in beide Richtungen blockiert.

Insbesondere können die Ausnehmungen und Stege bezüglich einer parallel zu den Flachseiten des Kettengliedes verlaufenden Mittelebene alternierend an sich gegenüberliegenden Seiten angeordnet sein. So kann das Ende eines Stegs näher an der einen Flachseite angeordnet und/oder die diesem Steg zugeordnete Ausnehmung zu der einen Flachseite hin offen sein und das Ende des jeweils benachbarten Stegs näher an der gegenüberliegenden Flachseite angeordnet und/oder die diesem Steg zugeordnete Ausnehmung zu der gegenüberliegenden Flachseite hin offen sein.

Vorzugsweise können jeweils genau drei Ausnehmungen und genau drei Stege vorhanden sein, wobei die außenliegenden Stege und Ausnehmungen auf der gleichen Seite bezüglich der Mittelebene angeordnet sind und die dazwischenliegende Ausnehmung bzw. der dazwischenliegende Steg auf der gegenüberliegenden Seite.

Gemäß einer vorteilhaften Ausgestaltung können das erste Teil und das zweite Teil in einer Richtung im Wesentlichen quer zur Mittelebene vor dem Schweißen formschlüssig in der Schweißposition fixiert sein. Insbesondere können die Teile zu beiden Seiten im Wesentlichen quer zur Mittelebene in der Schweißposition fixiert sein.

Das zweite Teil kann in einer Steckrichtung auf das erste Teil aufgesetzt sein. Hierfür können die Stege mit Auflager versehen sein, auf denen das zweite Teil in der Schweißposition aufliegt. Folglich kann sich das zweite Teil auf dem ersten Teil während dem Schweißen abstützen und ist in Steckrichtung formschlüssig fixiert. Die Steckrichtung bezeichnet hierbei eine parallel zu der von dem Kettenglied aufgespannten Mittelebene verlaufende Richtung.

Vorzugsweise können das erste und zweite Teil in Richtung im Wesentlichen quer zur Steckrichtung und parallel zur Mittelebene vor dem Schweißen formschlüssig fixiert sein. Die Bewegungsfreiheit der einzelnen Teile relativ zueinander kann soweit eingeschränkt werden, dass das zweite Teil bereits allein durch die Schwerkraft auf dem ersten Teil aufliegt und sich dabei genau in der Schweißposition befindet.

Das freie Ende des Stegs, das in der entsprechenden Ausnehmung eingesetzt ist, kann im Wesentlichen parallel zur Steckrichtung vom Auflager in Richtung weg von der gemeinsamen Basis vorspringen. Vorzugsweise weist das freie Ende in einer Ebene im Wesentlichen quer zur Steckrichtung einen kleineren Querschnitt auf, als der Steg unterhalb des zweiten Teils. Vorzugsweise bilden Auflager und freies Ende des Stegs ein Falz, in der das zweite Teil in der Schweißposition eingesetzt ist.

Die eingangs genannte Aufgabe wird weiterhin gelöst durch einen Kettenstrang für eine Reifenkette, wobei der Kettenstrang wenigstens zwei Kettenglieder nach einer der vorangehenden Ausführungsformen und wenigstens ein in die Einhängeöffnungen der wenigstens zwei Kettenglieder eingesetztes Verbindungsglied umfasst.

Der Kettenstrang kann insbesondere eine Mehrzahl von reihenweise oder netzartig ineinander gehängten Kettengliedern aufweisen. Bei der reihenweisen Anordnung kann beispielsweise ein Kettenstrang einer Reifenkette aus einer Vielzahl von aneinandergereihten Kettenglieder aufgebaut werden, wodurch sich Spur- und/oder Leiterstränge aufbauen lassen, durch die das Fahrverhalten und/oder die Traktion der Reifenkette gezielt beeinflusst werden kann. Bei den netzartig aufgebauten Kettensträngen kann ein engmaschiges Netz erzeugt werden, das die Reifen schützt.

Die wenigstens zwei Kettenglieder können Stegglieder sein, welche bei der auf dem Fahrzeugreifen montierten Reifenkette in Richtung weg von dem Fahrzeugreifen, insbesondere der Lauffläche des Fahrzeugreifens, gegenüber den anderen, insbesondere liegenden Kettengliedern, wie z.B. den Verbindungsgliedern, hervorragen. Solche Stegglieder bilden die Lauffläche der Reifenkette und sichert die Traktion. Das Stegglied kann im Vergleich zum Verbindungsglied besonders verschleißfest ausgestaltet sein. Insbesondere kann das Stegglied auf der von der Lauffläche des Fahrzeugreifens abgewandten Seite einen Verschleißsteg aufweisen, dessen Materialstärke gegenüber dem übrigen Kettenglied verstärkt ist. Mehrere Stegglieder können in ein im Wesentlichen ringförmiges Verbindungsglied eingehängt sein.

Die wenigstens zwei Kettenglieder und das Verbindungsglied können aus unterschiedlichen Werkstoffen gefertigt sein. So kann beispielsweise das Stegglied aus einem verschleißbeständigeren Werkstoff gefertigt sein als das Verbindungsglied. Die wenigstens zwei Stegglieder und das Verbindungsglied können aus unterschiedlichen Metalllegierungen gefertigt sein und/oder unterschiedliche Gefüge aufweisen.

Gemäß einer weiteren vorteilhaften Ausgestaltung können das wenigstens eine Stegglied und das Verbindungsglied und/oder die zusammengefügten Teile des wenigstens einen Kettenglieds, die aus unterschiedlichen Werkstoffen gefertigt sind, unterschiedlich, insbesondere getrennt voneinander, wärmebehandelt werden bzw. sein. Dadurch können die Eigenschaften jedes Teils des wenigstens einen Kettenglieds und/oder der unterschiedlichen Kettenglieder individuell und unabhängig voneinander durch die Wärmebehandlung optimiert sein. Ein Rückschluss auf den jeweiligen Wärmebehandlungsprozess kann beispielsweise durch eine gefügetechnische Untersuchung unter einem Lichtmikroskop gezogen werden.

In dem Kettenstrang können Verbindungsglieder und Stegglieder alternierend angeordnet sein. Bei einem Kettenstrang mit netzartig ineinander gehängten Kettengliedern kann eine Vielzahl von Steggliedern, beispielsweise vier Stegglieder, in einem Verbindungsglied eingehängt sein.

Ein oben beschriebener Kettenstrang kann in einem Laufnetz einer Reifenkette für Fahrzeugreifen angeordnet sein und/oder das Laufnetz setzt sich aus derartigen Kettensträngen zusammen. Eine Mehrzahl der Kettenstränge kann sich im Laufnetz der Reifenkette befinden. Ein Kettenstrang kann aber auch selber das Laufnetz der Reifenkette bilden.

Die wärmebehandelten Kettenglieder und/oder Teile eines Kettenglieds können mit einem Handhabungsroboter zum Kettenstrang zusammengelegt, insbesondere ineinandergehängt werden und anschließend kann das wenigstens eine Kettenglied mit einem Schweißroboter verschweißt werden. Folglich kann eine automatisierte Produktion des Kettenstranges erzielt werden.

Der Handhabungsroboter kann die Kettenglieder und/oder die Teile eines Kettengliedes direkt nach der Wärmebehandlung zusammenlegen, sodass diese beim Schweißen bereits erwärmt sind. Durch das zuvor wärmebehandelte Gefüge verringert sich die Temperaturdifferenz zwischen Schweißnaht und dem zu schweißenden Material. Folglich können thermische Spannungen reduziert werden. Weiterhin kann durch die Wärmevorbehandlung die Abkühlgeschwindigkeit nach dem Schweißen gesenkt werden, wodurch unerwünschte Verhärtungserscheinungen vermieden werden können und somit das Risiko von Kaltrissen minimiert werden kann.

Im Folgenden ist die Erfindung anhand von Ausführungsbeispielen mit Bezug auf die beigefügten Figuren exemplarisch näher beschrieben. In den Figuren sind Elemente, die einander hinsichtlich Aufbau und/oder Funktion entsprechen, mit denselben Bezugszeichen versehen.

Die bei den einzelnen Ausführungsbeispielen gezeigten und beschriebenen Merkmalskombinationen dienen lediglich zur Erläuterung. Nach Maßgabe der obigen Ausführungen kann auf ein Merkmal eines Ausführungsbeispiels verzichtet werden, wenn es auf dessen technischen Effekt bei einer bestimmten Anwendung nicht ankommt. Umgekehrt kann nach Maßgabe der obigen Ausführungen bei einem Ausführungsbeispiel ein weiteres Merkmal hinzugefügt werden, wenn dessen technischer Effekt für eine bestimmte Anwendung vorteilhaft oder notwendig sein sollte.

Es zeigen:
- Fig. 1: eine schematische Perspektivansicht einer beispielhaften Ausgestaltung eines Kettenglieds;
- Fig. 2: eine schematische Vorderansicht der beispielhaften Ausgestaltung des Kettenglieds;
- Fig. 3: eine schematische Rückansicht der beispielhaften Ausgestaltung des Kettenglieds;
- Fig. 4: eine schematische Draufsicht der beispielhaften Ausgestaltung des Kettenglieds; und
- Fig.5: eine schematische Seitenansicht der beispielhaften Ausgestaltung des Kettenglieds.

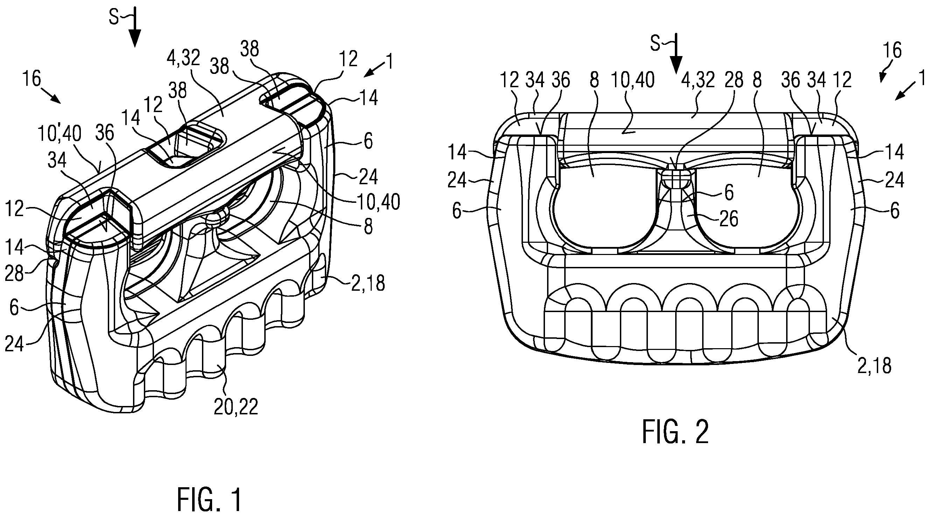

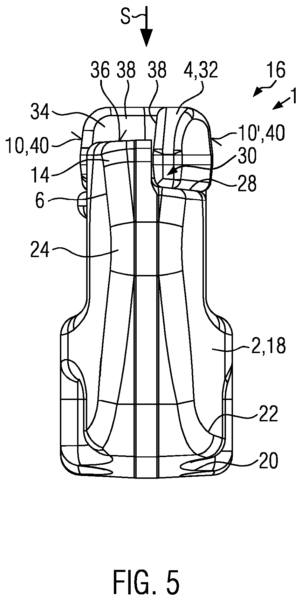

In den Figuren 1 bis 5 sind verschiedene schematische Ansichten einer beispielhaften Ausgestaltung eines Kettenglieds 1 gezeigt.

Das Kettenglied 1 weist ein erstes Teil 2 und ein mit dem ersten Teil 2 zusammengeschweißtes zweites Teil 4 auf. Das erste Teil 2 kann mit wenigstens zwei Stegen 6 versehen sein, die nebeneinander angeordnet sind. Dabei können jeweils zwei Stege 6 zusammen mit dem zweiten Teil 4 eine Einhängeöffnung 8 begrenzen. Das zweite Teil 4 ist an zwei sich gegenüberliegenden Seiten 10, 10' mit zu den Stegen 6 korrespondierenden Ausnehmungen 12 versehen, in denen jeweils ein Ende 14 des Stegs eingesetzt ist.

Das Kettenglied 1 kann als Stegglied 16 ausgestaltet sein. Ein Stegglied 16 ist ein Kettenglied 1, welches bei einer auf einem Fahrzeugreifen montierten Reifenkette in Richtung weg von dem Fahrzeugreifen, insbesondere der Lauffläche des Fahrzeugreifens, gegenüber anderen Kettengliedern, insbesondere Verbindungsgliedern, hervorragt. Solche Stegglieder 16 sichern die Traktion und bilden die Lauffläche der Reifenkette. Hierfür kann das erste Teil 2 als Verschleißteil 18 mit einem auf der von der Lauffläche des Fahrzeugreifens abgewandten Seite angeordneten Verschleißsteg 20 ausgestaltet sein.

Der Verschleißsteg 20 kann eine gemeinsame Basis 22 bilden, von der sich die wenigstens zwei Stege 6 im Wesentlichen parallel zu einer Steckrichtung S weg erstrecken. In dieser beispielhaften Ausgestaltung weist das erste Teil 2 drei Stege auf, wobei zwei außenliegende Stege 6 jeweils ein Bug 24 des Kettenglieds 1 bilden. Der dritte Steg 6 kann insbesondere äquidistant zwischen den zwei außenliegenden Stegen 6 angeordnet sein und einen Mittelsteg 26 bilden.

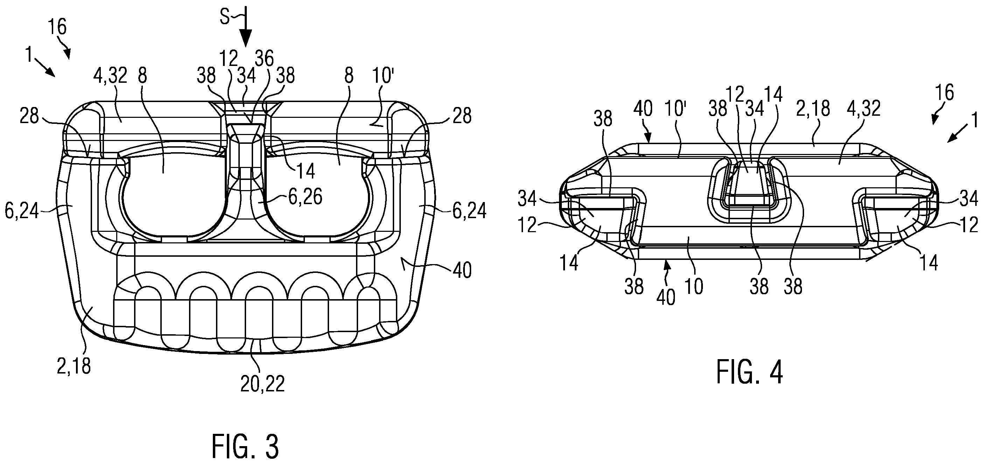

In einer Mittelebene, die in den Figuren 2 und 3 parallel zur Zeichenebene angeordnet ist, kann das erste Teil 2 einen im Wesentlichen ω-förmigen Querschnitt aufweisen. Der dritte Steg 6 kann jeweils zusammen mit einem außenliegenden Steg 6 eine separate Einhängeöffnung 8 bilden. Daher kann in jeder Einhängeöffnung 8 beispielsweise ein Verbindungsglied eingehängt werden, wobei die Verbindungsglieder sich nicht untereinander behindern.

Jeder Steg 6 ist mit einem freien Ende 14 versehen, das parallel zur Steckrichtung S vom restlichen Steg 6 vorspringt. Folglich ist ein Querschnitt des freien Endes 14 in einer im Wesentlichen senkrecht zur Steckrichtung S angeordneten Querschnittsebene kleiner als der Querschnitt des entsprechenden Stegs 6 unterhalb des freien Endes.

Die Stege 6 können jeweils ein Auflager 28 mit einer etwa parallel zur Querschnittsebene angeordneten Auflagefläche aufweisen, auf denen das zweite Teil 4 in der Schweißposition aufliegt. Mit "etwa parallel" ist hierbei eine Abweichung von der Parallelen von ±20°, ±15°, ±10° oder ±5° gemeint. Das freie Ende 14 kann dabei von dem Auflager 28 im Wesentlichen parallel zur Steckrichtung S vorspringen.

Vorzugsweise sind Auflager 28 und freies Ende 14 auf unterschiedlichen Seiten bezüglich einer parallel zur Mittelebene verlaufenden Ebene angeordnet, so dass Auflager 28 und freies Ende 14 einen Falz 30 bilden, in der das zweite Teil 4 in der Schweißposition eingesetzt ist.

Die freien Enden 14 der Stege 6 können alternierend versetzt zueinander angeordnet sein. Bei drei Stegen 6 können vorzugsweise die freien Enden 14 der außenliegenden Stege miteinander fluchten und versetzt zum freien Ende 14 des Mittelstegs 26 angeordnet sein. Insbesondere können die freien Enden 14 der außenliegenden Stege 6 und das freie Ende 14 des Mittelstegs 26 zumindest abschnittsweise bezüglich einer sich parallel zur Mittelebene erstreckenden Ebene auf unterschiedlichen Seiten angeordnet sein.

Das zweite Teil 4 kann ein Verschlussteil 32 bilden, das auf dem ersten Teil 2 in Steckrichtung S aufgesetzt ist. Das Verschlussteil 32 kann insbesondere plattenförmig ausgestaltet sein und eine ebene Auflagefläche zur Auflage auf dem Fahrzeugreifen bilden.

Für jedes freie Ende kann das zweite Teil 4 eine komplementäre Ausnehmung 12 aufweisen. Vorzugsweise können die außenliegenden Ausnehmungen in Richtung weg von der anderen außenliegenden Ausnehmung offen sein und in Richtung zur anderen außenliegenden Ausnehmung hin von einer Wandung 38 des zweiten Teils 4 begrenzt sein.

In der beispielhaften Ausgestaltung sind sämtliche Ausnehmungen parallel zur Steckrichtung S und im Wesentlichen in Richtung senkrecht zur Mittelebene offen. Dadurch kann das zweite Teil 4 einfach beispielsweise mit einem Handhabungsroboter auf das erste Teil aufgesetzt werden. Das zweite Teil 4 und das erste Teil 2 bilden dabei einen Formschluss, der eine relative Rotation um die Steckrichtung S herum blockiert. Weiterhin wird über den Formschluss eine Bewegung der Teile relativ zueinander sowohl in Richtung senkrecht zur Mittelebene als auch in Richtung senkrecht zur Steckrichtung S und parallel zur Mittelebene blockiert. Das Kettenglied 1 kann parallel zur Mittelebene erstreckende Flachseiten 40 aufweisen. Die Flachseiten 40 bilden die größten Seiten des Kettenglieds 1, wobei die Flachseiten 40 von den Flachseiten des ersten und zweiten Teils zusammengesetzt sind. Die Flachseiten des zweiten Teils können dabei mit den jeweiligen Ausnehmungen 12 versehen sein.

Das zweite Teil 4 kann gekröpft sein, wobei die Ausnehmung 12 für den Mittelsteg 26 von drei Seiten und die Ausnehmungen 12 für die außenliegenden Stege von zwei Seiten begrenzt sind.

Vorzugsweise überragt das zweite Teil 4 die freien Enden 14 des ersten Teils 2 in Richtung parallel zur Steckrichtung S. Dies ermöglicht die Positionierung der Schweißstelle 34 in der Ausnehmung 12, so dass an der Schweißstelle 34 eine Stirnfläche 36 des freien Endes 14 des ersten Teils 2 mit den die Ausnehmung begrenzenden Wandungen 38 des zweiten Teils 4 verschweißt ist. In einer vorteilhaften Ausgestaltung kann vorgesehen sein, dass die Schweißstelle bzw. das Schweißgut nicht aus der Ausnehmung 12 herausragt.

Diese Ausgestaltung erlaubt einen einfachen Zugriff auf eine Schweißstelle 34 beim Schweißen, wobei die Teile in der Schweißposition sicher fixiert sind. Im Gegensatz zu einer Ausgestaltung, in der die freien Enden des ersten Teils auf einer Ebene angeordnet sind und durch Durchgangslöcher des zweiten Teils hindurchgesteckt werden, kann die relative Bewegung, insbesondere eine relative Rotation der Teile beim Schweißen verringert werden. Folglich ist es einfacher, die Teile in der Schweißposition zu halten.

Mehrere dieser Kettenglieder 1 können mittels Verbindungsgliedern (nicht gezeigt) zu einem Kettenstrang zusammengesetzt werden. Die Verbindungsglieder können insbesondere ringförmig sein, wobei jeweils ein Verbindungsglied in eine Einhängeöffnung zweier oder auch mehrerer Kettenglieder 1 eingehängt ist.

### Bezugszeichen

- 1: Kettenglied
- 2: erstes Teil
- 4: zweites Teil
- 6: Steg
- 8: Einhängeöffnung
- 10,10': Seite
- 12: Ausnehmung
- 14: Ende
- 16: Stegglied
- 18: Verschleißteil
- 20: Verschleißsteg
- 22: Basis
- 24: Bug
- 26: Mittelsteg
- 28: Auflager
- 30: Falz
- 32: Verschlussteil
- 34: Schweißstelle
- 36: Stirnfläche
- 38: Wandung
- 40: Flachseite
- S: Steckrichtung

## Patentansprüche

1. Kettenglied (1) für eine Reifenkette, wobei das Kettenglied (1) ein erstes Teil (2) und ein mit dem ersten Teil (2) zusammengeschweißtes zweites Teil (4) aufweist, wobei das erste Teil (2) mit wenigstens zwei nebeneinander angeordneten Stegen (6) versehen ist, wobei eine Einhängeöffnung (8) von jeweils zwei Stegen (6) und dem zweiten Teil (4) begrenzt ist und wobei das zweite Teil an zwei sich gegenüberliegenden Seiten (10, 10') mit Ausnehmungen (12) versehen ist, in denen jeweils ein Ende (14) der Stege (6) eingesetzt ist, **dadurch gekennzeichnet, dass** das erste Teil (2) drei Stege (6) aufweist und sich zwischen jeweils zwei Stegen (6) eine Einhängeöffnung (8) befindet, wobei die drei Stege (6) in drei Ausnehmungen (12) des zweiten Teils (4) eingesetzt sind und wobei die Ausnehmungen (12) und Stege (6) alternierend an den sich gegenüberliegenden Seiten (10, 10') angeordnet sind.

2. Kettenglied (1) nach Anspruch 1, wobei jeweils das Ende (14) eines Stegs (6) mit der ihn aufnehmenden Ausnehmung (12) verschweißt ist.

3. Kettenglied (1) nach Anspruch 1 oder 2, wobei die Anzahl der Ausnehmungen (12) der Anzahl der Stege (6) entspricht.

4. Kettenglied (1) nach einem der Ansprüche 1 bis 3, wobei das zweite Teil (4) die Stege (6) überragt.

5. Kettenglied (1) nach einem der Ansprüche 1 bis 4, wobei die Stege (6) Auflager (28) aufweisen, auf denen das zweite Teil (4) aufliegt.

6. Kettenglied (1) nach einem der Ansprüche 1 bis 5, wobei die Ausnehmung (12) des zweiten Teils (4) in Richtung zur von dem ersten Teil (2) abgewandten Seite des zweiten Teils (4) hin offen ist.

7. Kettenglied (1) nach einem der Ansprüche 1 bis 6, wobei die Ausnehmung (12) des zweiten Teils (4) in Richtung senkrecht zu einer Flachseite des Kettenglieds (1) offen ist.

8. Kettenglied (1) nach einem der Ansprüche 1 bis 7, wobei das Ende (14) einen kleineren Querschnitt aufweist, als ein Querschnitt des Stegs (6) unterhalb des zweiten Teils (4).

9. Kettenglied (1) nach einem der Ansprüche 1 bis 8, wobei das erste Teil (2) und das zweite Teil (4) aus unterschiedlichen Werkstoffen gefertigt sind und/oder unterschiedlich wärmevorbehandelt sind.

10. Kettenstrang für eine Reifenkette umfassend wenigstens zwei Kettenglieder (1) nach einem der Ansprüche 1 bis 9 und wenigstens ein in den Einhängeöffnungen (8) der wenigstens zwei Kettenglieder (1) eingesetztes Verbindungsglied.

11. Reifenkette für ein Fahrzeugreifen, **gekennzeichnet durch** ein Laufnetz mit wenigstens einem Kettenstrang nach Anspruch 10.

## Claims

1. A chain link (1)for a tire chain, the chain link (1) having a first part (2) and a second part (4) welded together with the first part (2), the first part (2) being provided with at least two bars (6) arranged next to one another, wherein a hook-in eyelet (8) is delimited in each case by two bars (6) and the second part (4), and wherein the second part is provided with recesses on two opposite sides (10, 10'), into each of which one end (14) of the bars (6) is inserted, **characterized in that** the first part (2) has three bars (6) and a hook-in eyelet (8) is located between two bars (6) in each case, wherein the three bars (6) are inserted into three recesses (12) of the second part (4) and wherein the recesses (12) and bars (6) are arranged alternately on the opposite sides (10, 10').

2. The chain link (1) according to claim 1, wherein the end (14) of each bar (6) is welded to the recess (12) accommodating it.

3. The chain link (1) according to claim 1 or 2, wherein the number of recesses (12) corresponds to the number of bars (6).

4. The chain link (1) according to one of claims 1 to 3, wherein the second part (4) projects beyond the bars (6).

5. The chain link (1) according to one of claims 1 to 4, wherein the bars (6) have supports (28) on which the second part (4) is supported.

6. The chain link (1) according to one of claims 1 to 5, wherein the recess (12) of the second part (4) is open towards the side of the second part (4) facing away from the first part (2).

7. The chain link (1) according to any one of claims 1 to 6, wherein the recess (12) of the second part (4) is open in the direction perpendicular to a flat side of the chain link (1).

8. The chain link (1) according to any one of claims 1 to 7, wherein the end (14) has a smaller cross-section than a cross-section of the bar (6) below the second part (4).

9. The chain link (1) according to one of claims 1 to 8, wherein the first part (2) and the second part (4) are made of different materials and/or are heat-pretreated differently.

10. A chain strand for a tire chain comprising at least two chain links (1) according to one of claims 1 to 9 and at least one connecting link inserted in the hook-in eyelets (8) of the at least two chain links (1).

11. A tire chain for a vehicle tire, **characterized by** a chain mesh with at least one chain strand according to claim 10.

## Revendications

1. Maillon de chaîne (1) pour une chaîne pour pneumatique, dans lequel le maillon de chaîne (1) comprend une première partie (2) et une deuxième partie (4) soudée à la première partie (2), dans lequel la première partie (2) comporte au moins deux traverses agencées de manière adjacente (6), dans lequel une ouverture d'accrochage (8) est délimitée par deux traverses (6) et la deuxième partie (4), et dans lequel la deuxième partie est pourvue, sur deux côtés opposés (10, 10'), de renfoncements (12) dans chacun desquels est insérée une extrémité (14) des traverses (6), **caractérisé en ce que** la première partie (2) comporte trois traverses (6) et une ouverture d'accrochage (8) est située entre chaque paire de traverses (6), dans lequel les trois traverses (6) sont insérées dans trois renfoncements (12) de la deuxième partie (4), et dans lequel les renfoncements (12) et les traverses (6) sont agencés alternativement sur les côtés opposés (10, 10').

2. Maillon de chaîne (1) selon la revendication 1, dans lequel chaque extrémité (14) d'une traverse (6) est soudée au renfoncement (12) qui la reçoit.

3. Maillon de chaîne (1) selon la revendication 1 ou 2, dans lequel le nombre de renfoncements (12) correspond au nombre de traverses (6).

4. Maillon de chaîne (1) selon l'une des revendications 1 à 3, dans lequel la deuxième partie (4) dépasse les traverses (6).

5. Maillon de chaîne (1) selon l'une des revendications 1 à 4, dans lequel les traverses (6) comportent des supports (28) sur lesquels repose la deuxième partie (4).

6. Maillon de chaîne (1) selon l'une des revendications 1 à 5, dans lequel le renfoncement (12) de la deuxième partie (4) est ouvert en direction du côté de la deuxième partie (4) opposé à la première partie (2).

7. Maillon de chaîne (1) selon l'une des revendications 1 à 6, dans lequel le renfoncement (12) de la deuxième partie (4) est ouvert dans une direction perpendiculaire à un côté plat du maillon de chaîne (1).

8. Maillon de chaîne (1) selon l'une des revendications 1 à 7, dans lequel l'extrémité (14) présente une section transversale plus petite qu'une section transversale de la traverse (6) sous la deuxième partie (4).

9. Maillon de chaîne (1) selon l'une des revendications 1 à 8, dans lequel la première partie (2) et la deuxième partie (4) sont constituées de matériaux différents et/ou reçoivent un traitement thermique différent.

10. Brin de chaîne pour une chaîne pour pneumatique comportant au moins deux maillons de chaîne (1) selon l'une des revendications 1 à 9 et au moins un maillon de connexion inséré dans les ouvertures d'accrochage (8) desdits au moins deux maillons de chaîne (1).

11. Chaîne pour pneumatique pour un pneu de véhicule, **caractérisée par** un filet de roulement comportant au moins un brin de chaîne selon la revendication 10.
